# EUROPÄISCHE PATENTANMELDUNG

(11) **EP 4 663 310 A1**
(43) Veröffentlichungstag der Anmeldung: **17.12.2025**
(21) Anmeldenummer: 24181137.1
(22) Anmeldetag: 10.06.2024
(51) Int. Cl.: B07B 13/00, B07B 13/07, B07B 13/11

(54) **DOSIERVORRICHTUNG FÜR KUGELARTIGE PELLETS**

(71) Anmelder: Harro Höfliger Verpackungsmaschinen GmbH, 71573 Allmersbach im Tal (DE)
(72) Erfinder: Blum, Uwe, 71573 Allmersbach im Tal (DE); Haberzettl, Dieter, 71573 Allmersbach im Tal (DE)
(74) Vertreter: Zurhorst, Stefan

(57) **Zusammenfassung**

Die Erfindung betrifft eine Dosiervorrichtung für kugelartige Pellets (1), insbesondere für Lyo Beads, umfassend einen Größensortierer (2), einen Formsortierer (3) und eine Vereinzelungsvorrichtung (4) für die Pellets (1). Der Größensortierer (2) weist zwei Sortierwalzen (5, 6) auf, welche um ihre Längsachsen (7, 8) drehend antreibbar sind, und welche nebeneinander derart positioniert sind, dass zwischen ihnen ein entlang der Längsachsen (7, 8) variierender und an eine vorgegebene Zielgröße der Pellets (1) angepasster Abstand (a, a₁, a₂, a₃) verbleibt. Der Formsortierer (3) ist als gegenüber einer Horizontalrichtung (x) geneigte Vibrationsförderplatte (9) mit einem oberen Ende (10), mit einem unteren Ende (11), und mit einer im Bereich des unteren Endes (11) angeordneten Auffangvorrichtung (12) für Pellets (1) zur Weiterleitung an die Vereinzelungsvorrichtung (4) ausgebildet.

## Beschreibung

Die Erfindung betrifft eine Dosiervorrichtung für kugelartige Pellets, insbesondere für Lyo Beads.

Viele Wirkstoffe insbesondere im pharmazeutischen Bereich sind in wässriger Lösung nur kurze Zeit haltbar. Vor allem bei thermisch empfindlichen Stoffen stellt das Gefriertrocknen (Lyophilisierung) einen Ausweg dar, um lagerfähige Formulierungen zu erreichen. Nach Schockgefrieren und Wasserentzug bei starkem Unterdruck entstehen kugelartige Pellets in Perlenform, die auch Lyo Beads genannt werden. Durch das Gefriertrocknen bleibt ein im Wesentlichen kugelartiges, poröses Gerüst aus Wirk- und Hilfsstoffen zurück, welches eine geringe Dichte und eine im Vergleich dazu sehr große, stark hygroskopische Oberfläche aufweist.

Ihre hohe Lösungsgeschwindigkeit prädestiniert Lyo Beads für Parenteralia wie beispielsweise Impfstoffe. Auch für neue Diagnostik-Tools wie Lab-on-a-Chip-Systeme eignen sie sich aufgrund ihrer Lagerstabilität sehr gut. Allerdings erfordert die brüchige Struktur der Lyophilisate eine vorsichtige Handhabung. Die durchschnittlich 1,5 bis 4,0 Millimeter großen Lyo Beads reagieren nämlich anfällig auf mechanischen Abrieb und Verdichtung, laden sich elektrostatisch auf, und müssen bei geringer Feuchte weiterverarbeitet werden. Überdies müssen die Lyo Beads einzeln dosiert werden.

Beim Herstellprozess kann es zu unerwünschten Größen- und/oder Formtoleranzen der im Regelfall kugelartigen Lyo Beads kommen. Lyo Beads mit Durchmesserunterschieden, Abflachungen oder kleinen Auswachsungen müssen deshalb vor dem Dosieren nach Möglichkeit aussortiert werden.

Der Erfindung liegt die Aufgabe zugrunde, eine Dosiervorrichtung für kugelartige Pellets, insbesondere für Lyo Beads anzugeben, welche eine zuverlässige Aussortierung von Exemplaren mit übermäßigen Größenabweichungen und auch Formabweichungen sowie außerdem eine vorsichtige Einzeldosierung ermöglicht.

Eine weitere Schwierigkeit liegt in der Struktur der Lyo Beads und der daraus folgenden Eigenschaften begründet. In Folge der Lyophilisierung verbleibt ein schwammartiges Gerüst mit hohem Porenanteil vergleichbar zu einem Hartschaum. Die mechanische Belastbarkeit eines solchen hartschaumartigen Gebildes insbesondere hinsichtlich Druck-, Scher- und Abriebfestigkeit ist gering. Gleichzeitig ist das Verhältnis von Masse zu Volumen sehr gering. Aufgrund von Elektrostatik, Adhäsion und/oder anderen Bindungsmechanismen neigen die Lyo Beads zum Anhaften aneinander und auch an anderen Oberflächen, mit denen sie in Kontakt kommen. Diesen Haftkräften stehen nur sehr geringe Massekräfte gegenüber, sodass sich ein insgesamt schwieriges Schütt- und Fließverhalten ergibt. Insbesondere ist unter den genannten Umständen eine Vereinzelung schwierig, ohne dabei die Lyo Beads zu beschädigen.

Diese Aufgabe wird durch eine Dosiervorrichtung mit den Merkmalen des Anspruchs 1 gelöst.

Nach der Erfindung ist eine Dosiervorrichtung für kugelartige Pellets, insbesondere für Lyo Beads vorgesehen, welche einen Größensortierer, einen Formsortierer und eine Vereinzelungsvorrichtung für die Pellets umfasst. Der Größensortierer weist zwei Sortierwalzen auf, welche um ihre Längsachsen drehend antreibbar sind, und welche nebeneinander derart positioniert sind, dass zwischen ihnen ein entlang der Längsachsen variierender und an eine vorgegebene Zielgröße der Pellets angepasster Abstand verbleibt. Der Formsortierer ist als gegenüber einer Horizontalrichtung geneigte Vibrationsförderplatte mit einem oberen Ende, mit einem unteren Ende, und mit einer im Bereich des unteren Endes angeordneten Auffangvorrichtung für Pellets zur Weiterleitung an die Vereinzelungsvorrichtung ausgebildet.

Die erfindungsgemäße Dosiervorrichtung besteht demnach im Wesentlichen aus drei Komponenten für die insbesondere sequentielle Erfüllung dreier Aufgaben. In der ersten Komponente, nämlich im Größensortierer erfolgt die Aussortierung von zu kleinen und von zu großen Pellets. In der zweiten Komponente, nämlich im Formsortierer erfolgt eine Aussortierung von Pellets, die eine nicht ausreichend genaue Kugelgestalt haben. Schließlich erfolgt in der dritten Komponente, nämlich in der Vereinzelungsvorrichtung die Einzeldosierung der hinsichtlich Größe und Form für gut befundenen kugelartigen Pellets.

Dabei machen sich alle drei Komponenten der Dosiervorrichtung die angestrebte Kugelform zu Nutze: Die Pellets werden auf die Oberseite des Paares von drehenden Sortierwalzen aufgebracht, wobei sie sich Bereich des Spaltes zwischen den Sortierwalzen befinden und eine Bewegung entlang der Längsachsen der Sortierwalzen ausführen. Der variierende und an eine vorgegebene Zielgröße der Pellets angepasste Abstand zwischen den Sortierwalzen bewirkt, dass im Bereich eines geringen Walzenabstandes nur die zu kleinen Pellets zwischen den Walzen hindurchfallen und aussortiert werden. Im Bereich eines der Zielgröße entsprechenden Walzenabstandes fallen die Pellets mit Wunschdurchmesser hindurch und können der Weiterverarbeitung zugeführt werden, während zu große Pellets den Walzenspalt nicht passieren können und noch zurückgehalten werden. Im Bereich eines weiter vergrößerten Walzenabstandes fallen dann schließlich auch noch die verbleibenden, als zu groß befundenen Pellets zwischen den Walzen hindurch und werden damit ebenso wie die zu kleinen Pellets aussortiert. Insbesondere die Pellets mit Zielgröße und kugelartiger Zielform können dabei schonend auf den Oberflächen der sich drehenden Sortierwalzen abrollen, wobei sie eine schonende Sortierung erfahren.

Auf der Vibrationsförderplatte des Formsortierers kommt ebenfalls die angestrebte Kugelform zur Geltung. Pellets mit ausreichend genauer Kugelgestalt rollen auf der geneigten Vibrationsförderplatte in Richtung des unteren Endes ab. Zwischen den rollenden kugelartigen Pellets und der Oberfläche der Vibrationsförderplatte können praktisch keine Tangentialkräfte entstehen. Der Abrollvorgang ist quasi reibungsfrei und schonend, und die solchermaßen als ausreichend rund identifizierten Pellets können frei von Beschädigungen der Vereinzelung zugeführt werden. Aufgrund einer praktisch fehlenden Übertragung von Tangentialkräften ist die Vibrationsförderplatte nicht in der Lage, die wunschgemäß runden Pellets gegen ihre Rollrichtung zum oberen Ende hin zu transportieren, womit sie als Fördervorrichtung für diese runden Pellets praktisch wirkungslos bleibt. Anders sieht dies bei den Pellets mit von der idealen Kugelform abweichender Gestalt aus. Im Falle von unrunden Formen oder sogar von Bruchstücken ist die Abrollbewegung behindert oder sogar unmöglich. Die Vibrationsförderplatte kann Tangentialkräfte bzw. Reibkräfte aufbringen und die unrunden Pellets zum oberen Rand hin befördern, wo sie dann aussortiert werden.

Die solchermaßen hinsichtlich passender Größe und ausreichend genauer Kugelgestalt identifizierten Pellets können dann schließlich in der Vereinzelungsvorrichtung schonend als Einzel-Pellet dosiert werden.

In einer bevorzugten Ausführungsform weisen die beiden Sortierwalzen eine gegenläufige, auf ihrer Oberseite auseinanderlaufende Drehrichtung auf. Hierdurch ist ein Abrollen der Pellets auf den Oberflächen beider Walzen sichergestellt, ohne dass sie in den Spalt zwischen den Walzen gezogen werden. Selbst besonders unrunde Pellets oder Bruchstücke davon bleiben oberhalb der Walzen, bis sie ordnungsgemäß an geeigneter Stelle durch den Spalt zwischen ihnen hindurchfallen können.

Vorteilhaft liegen die Längsachsen der beiden Sortierwalzen zur Erzeugung des variierenden Abstandes in einem Öffnungswinkel zueinander. Dies erlaubt den Einsatz von Sortierwalzen mit einfacher, kostengünstig und präzise herstellbarer Geometrie, wobei insbesondere zumindest eine Sortierwalze zylindrisch mit einem entlang ihrer Längsachse konstanten Durchmesser ausgeführt ist. Durch Einstellung des Öffnungswinkels lassen sich geeignete Abstandsbereiche und damit Bereiche der Größensortierung stufenlos einstellen.

In einer zweckmäßigen Variante weist zumindest eine Sortierwalze zur Erzeugung des variierenden Abstandes verschiedene entlang ihrer Längsachse gestufte Durchmesser auf. Die Abstufung der Durchmesser führt zu einem abgestuften Abstandsverlauf zwischen den Sortierwalzen. Hierdurch können in einfacher Weise klar definierte Grenzen für innerhalb und außerhalb der Größentoleranz liegende Pellets gesetzt werden.

Für die Größensortierung ist es erforderlich, dass sich die Pellets entlang der Sortierwalzen bewegen. Zur Erzeugung eines entsprechenden Vortriebes für die Pellets in dieser Bewegungsrichtung liegen die Längsachsen der beiden Sortierwalzen vorteilhaft in einem ersten Neigungswinkel zur Horizontalrichtung. Nach dem Prinzip der schiefen Ebene sorgt die auf die Pellets einwirkende Gewichtskraft für einen Vortrieb, welcher die Pellets entlang der verschiedenen Abstände zwischen den Walzen bewegt. Die Drehbewegung der Sortierwalzen in Verbindung mit der Abrollbewegung der Pellets darauf eliminiert praktisch jede Reibung, sodass bereits ein geringer Neigungswinkel für eine stetige, gut kontrollierbare und wiederholgenau einstellbare Vortriebsgeschwindigkeit sorgt.

In einer vorteilhaften Ausführungsform weist die Vereinzelungsvorrichtung eine gegenüber der Horizontalrichtung schräg stehende, drehend antreibbare Formatscheibe mit Aufnahmelöchern für die Pellets auf. Aus einem Vorrat von hinsichtlich Größe und Form für gut befundenen Pellets werden einzelne Exemplare schonend entnommen und weiteren Prozessschritten zugeführt, ohne dass Bruch oder übermäßiger Abrieb entsteht.

In einem eigenständigen Erfindungsgedanken, aber auch als Teil der vorstehend beschriebenen Dosiervorrichtung kann es zweckmäßig sein, dass die Vereinzelungsvorrichtung ein um eine Drehachse drehend antreibbares Vakuumdosierrad, eine Vakuumquelle, sowie eine Drucksteuereinrichtung umfasst, wobei in einer seitlichen Stirnfläche des Vakuumdosierrades mit radialem Abstand zur Drehachse mindestens eine Ansaugöffnung für die Pellets angeordnet ist, und wobei eine Verbindung der Vakuumquelle mit der Ansaugöffnung mittels der Drucksteuereinrichtung ein- und ausschaltbar ist.

In der Praxis hat sich gezeigt, dass das seitliche Heranführen der empfindlichen Lyo Beads an die Stirnfläche des Vakuumdosierrades besonders schonend ist. Es sind nur sehr geringe Kräfte erforderlich. Es besteht praktisch keine Gefahr, dass einzelne Pellets verklemmen, zerdrückt oder zerrieben werden. Die Pellets müssen nicht durch umständliche Transportwege in irgendwelche Aufnahmetaschen gezwungen werden. Das Anhaften der Pellets an den Rändern der Ansaugöffnungen fordert nur geringe Saugkräfte. Mit ebenso geringen Kräften lassen sich die Lyo Beads wieder lösen.

Ausführungsbeispiele der Erfindung sind nachfolgend anhand der Zeichnung näher beschrieben. Es zeigen:
- Fig. 1: in einer schematischen Seitenansicht einen Größensortierer als Teil der erfindungsgemäßen Dosiervorrichtung mit relativ zur Horizontalrichtung geneigten Sortierwalzen,
- Fig. 2: in einer schematischen Frontansicht den Größensortierer nach Fig. 1 mit einem Paar von gegenläufig, auf ihrer Oberseite nach außen drehenden Sortierwalzen,
- Fig. 3: einer schematischen Draufsicht das Paar von Sortierwalzen nach Fig. 2 in zylindrischer Ausführung mit in einem Öffnungswinkel zueinander liegenden Längsachsen zur Bildung eines variierenden Abstandes,
- Fig. 4: eine Variante des Walzenpaars nach Fig. 3 mit parallelen Sortierwalzen und mit einer im Durchmesser abgestuften Sortierwalze zur Bildung des variierenden Abstandes,
- Fig. 5: in einer schematischen Seitenansicht einen Formsortierer als Teil der erfindungsgemäßen Dosiervorrichtung mit einer gegenüber der Horizontalrichtung geneigten Vibrationsförderplatte,
- Fig. 6: in einer schematischen Seitenansicht eine Vereinzelungsvorrichtung als Teil der erfindungsgemäßen Dosiervorrichtung mit einer schräg stehenden, drehend antreibbaren Formatscheibe zur Aufnahme einzelner Pellets,
- Fig. 7: in einer Stirnansicht die Formatscheibe nach Fig. 6 mit einzelnen Aufnahmelöchern für die Pellets,
- Fig. 8: eine erfindungsgemäße Ausführungsform der Vereinzelungsvorrichtung mit einem drehend antreibbaren Vakuumdosierrad, mit einer Vakuumquelle zum Ansaugen einzelner Pellets, sowie mit einer Drucksteuereinrichtung,
- Fig. 9: in einer Stirnansicht das Vakuumdosierrad nach Fig. 8 mit Ansaugöffnungen und mit einer Ausschleusung für angesaugte Pellets, und
- Fig. 10: in einer Stirnansicht die Drucksteuereinrichtung nach Fig. 8 zur gesteuerten Beaufschlagung der Ansaugöffnungen nach Fig. 9 abschnittsweise mit Unter- und Überdruck.

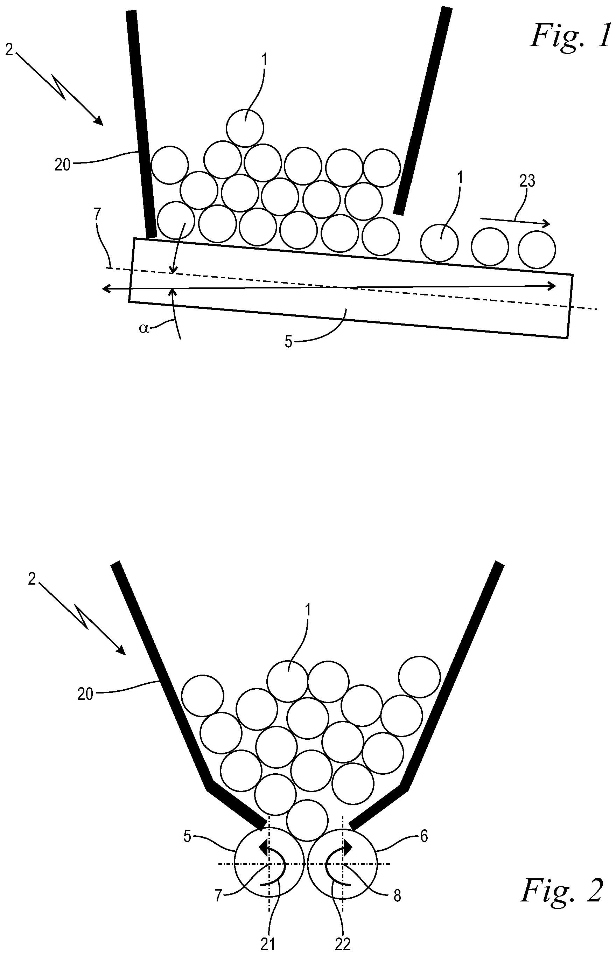

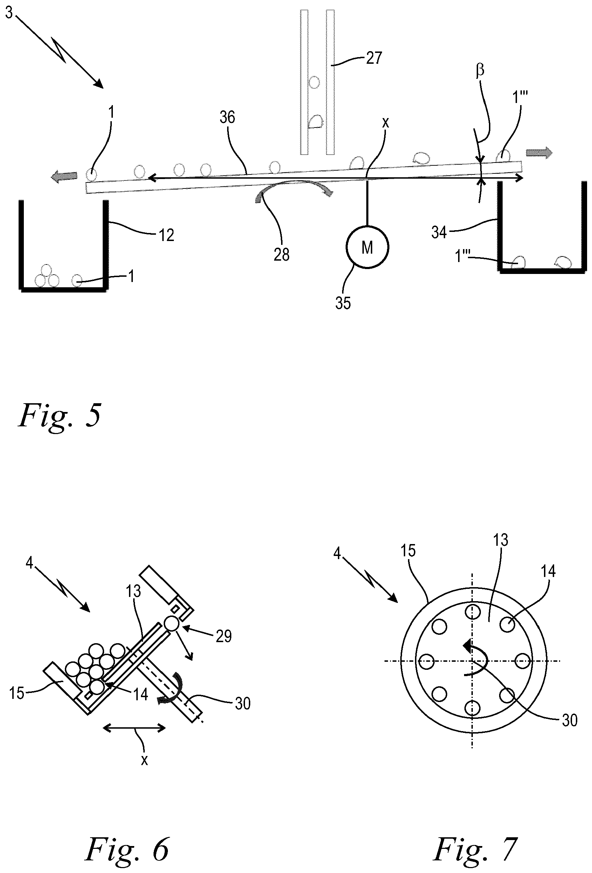

Die erfindungsgemäße Dosiervorrichtung für kugelartige Pellets 1 umfasst zumindest drei Komponenten bzw. Funktionsgruppen, nämlich einen Größensortierer 2 beispielhaft nach den Fig. 1 bis 4, einen Formsortierer 3 beispielhaft nach Fig. 5 und eine Vereinzelungsvorrichtung 4 beispielhaft nach den Fig. 6 bis 10. Alle drei Komponenten bzw. Funktionsgruppen sind hier der guten Übersicht halber einzeln dargestellt, können aber in der Praxis zu einer räumlich und auch funktional integrierten Vorrichtung zusammengefasst sein. Als "kugelartige" Pellets 1 sind hier solche Pellets mit räumlich gekrümmter Oberfläche gemeint, die in verschiedene Richtungen abrollen können, womit neben tatsächlichen Kugeln auch Ellipsoide, ovale Formen oder Formen mit unregelmäßiger Radienverteilung bei gegebener Rollfähigkeit eingeschlossen sind.

Fig. 1 zeigt in einer schematischen Seitenansicht ein Ausführungsbeispiel eines Größensortierers 2. Pellets 1 werden in einem Behälter 20 als Schüttgut bereitgehalten mit dem Ziel, solche Exemplare davon zu vereinzeln, welche innerhalb einer definierten Durchmessertoleranz liegen und dabei eine ausreichend genaue Kugelgestalt aufweisen. Bevorzugt handelt es sich bei diesen runden Pellets 1 um durch Lyophilisierung gewonnene sogenannte Lyo Beads. Die übrigen Exemplare, welche zu klein, zu groß oder zu unrund sind, sollen aussortiert werden.

Fig. 2 zeigt in einer schematischen Frontansicht den Größensortierer 2 nach Fig. 1. Aus der Zusammenschau der Fig. 1 und 2 ergibt sich, dass unterhalb des Behälters 20 ein Paar von nebeneinander positionierten Sortierwalzen 5, 6 angeordnet ist. Die Sortierwalzen 5, 6 weisen jeweils eine Längsachse 7, 8 auf, wobei sie um diese Längsachsen 7, 8 mittels einer nicht dargestellten Antriebseinheit entsprechend Pfeilen 21, 22 drehend antreibbar sind. Für die Wahl der Drehrichtung der Sortierwalzen 5, 6 kommen verschiedene Möglichkeiten in Betracht. Im gezeigten bevorzugten Ausführungsbeispiel insbesondere nach Fig. 2 ist eine gegenläufige Drehrichtung derart gewählt, dass die Umfangsflächen der Sortierwalzen 5, 6 auf ihrer in Gewichtskraftrichtung nach oben weisenden Oberseite auseinander laufen, dass sich also dort die Umfangsflächen voneinander fort bewegen.

Aus der Zusammenschau der Fig. 1 und 2 ergibt sich des Weiteren, dass die Längsachsen 7, 8 der beiden Sortierwalzen 5, 6 in einem ersten Neigungswinkel α > 0° zu einer Horizontalrichtung x liegen. Dies führt dazu, dass die Oberseiten der Sortierwalzen 5, 6 an einem Ende höher liegen als am gegenüberliegenden Ende. Der Behälter 20 ist im Bereich des höher liegenden Endes angeordnet, sodass die Pellets 1 im Bereich dieses höher liegenden Endes auf die Oberseite der Sortierwalzen 5, 6 aufgebracht werden. Aus Fig. 2 ergibt sich noch, dass die Sortierwalzen in diesem Bereich derart dicht nebeneinander liegen, dass die Pellets 1 dort nicht zwischen ihnen hindurchfallen können. Vielmehr bilden die beiden Sortierwalzen 5, 6 in diesem Bereich eine Rinne, in welcher die Pellets 1 zu liegen kommen. Die Schrägstellung der Längsachsen 7, 8 um den ersten Neigungswinkel α bewirkt einen auf die Pellets 1 einwirkenden Vortrieb entlang der Längsrichtung der Sortierwalzen 5, 6 vom höheren Ende zum niedrigeren Ende hin. Dieser Vortrieb bewirkt in Verbindung mit der Drehbewegung der Sortierwalzen 5, 6, dass sich die Pellets in der genannten Rinne entlang eines Pfeiles 23 ausgehend vom hohen Ende mit dem Behälter 20 in Richtung des niedrigen Endes der Sortierwalzen 5, 6 bewegen.

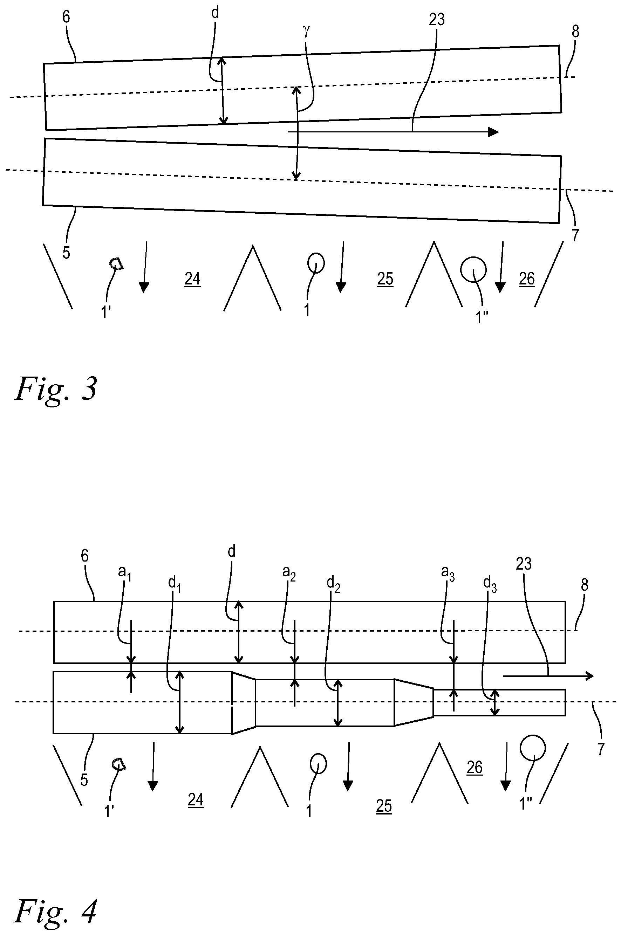

Zudem sind die Sortierwalzen 5, 6 derart nebeneinander positioniert, dass zwischen ihnen ein entlang der Längsachsen 7, 8 variierender und an eine vorgegebene Zielgröße der Pellets 1 angepasster Abstand a, a₁, a₂, a₃ verbleibt. Es ist also ein Spalt mit entsprechend nichtkonstanter Breite gebildet. Fig 3 zeigt hierzu in einer schematischen Draufsicht ein erstes Ausführungsbeispiel eines Paares von Sortierwalzen 5, 6 nach Fig. 2. Zumindest eine Sortierwalze 6 ist zylindrisch ausgeführt. Vorliegend sind beide Sortierwalzen 5, 6 in Form eines Zylinders mit einem entlang ihrer j eweiligen Längsachse 7, 8 konstanten Durchmesser d ausgeführt. Außerdem liegen die Längsachsen 7, 8 der beiden Sortierwalzen 5, 6 zur Erzeugung des variierenden Abstandes a in einem in der Horizontalebene gemessenen Öffnungswinkel γ > 0° zueinander. Der Abstand a variiert dabei entlang der Walzenlängsrichtung derart, dass er am höheren Ende der Sortierwalzen 5, 6 im Bereich des Behälters 20 am geringsten ist, von dort aus zum niedrigeren Ende hin kontinuierlich größer wird, und im Bereich des niedrigeren Endes am größten ist.

Unterhalb des Paares von Sortierwalzen 5, 6 befindet sich im Bereich des durch den Abstand a gebildeten Spaltes ein erster Auffangabschnitt 24, ein zweiter Auffangabschnitt 25 und ein dritter Auffangabschnitt 26, welche hier der besseren Übersicht halber nicht unterhalb, sondern neben den Sortierwalzen 5, 6 zeichnerisch dargestellt sind. Wie weiter oben schon erwähnt wurde, bewegen sich die Pellets 1 entlang der Sortierwalzen 5, 6 im Spaltbereich dazwischen und in Richtung des Pfeiles 23, wobei anfänglich nahe dem Behälter 20 möglichst alle Pellets 1 in bzw. auf der zwischen den Sortierwalzen 5, 6 gebildeten Rinne liegen. Entlang des Bewegungsverlaufs der Pellets 1 in Richtung des Pfeiles 23 wird der Abstand a in einem solchen Maße größer, dass zunächst kleine Pellets 1' durch den noch engen Spalt mit geringem Abstand a zwischen den Sortierwalzen 5, 6 hindurchfallen und im ersten Auffangabschnitt 24 eingesammelt werden. Größere Pellets 1, 1" werden an dieser Stelle von den Sortierwalzen 5, 6 auf deren Oberseite zurückgehalten. Im weiteren Bewegungsverlauf dieser zunächst noch zurückgehaltenen Pellets 1, 1" fallen mittelgroße Pellets 1 durch den Spalt im Bereich des mittelgroßen Abstandes a und werden im zweiten Auffangabschnitt 25 eingesammelt. Analog dazu werden die noch größeren Pellets 1" im Bereich des zweiten Auffangabschnitts 25 von den Sortierwalzen 5, 6 vorerst zurückgehalten, um dann im weiteren Bewegungsverlauf in Richtung des Pfeiles 23 schließlich durch den Spalt mit weiter vergrößertem Abstand a hindurchzufallen und im dritten Auffangabschnitt 26 eingesammelt zu werden.

Dabei ist der genannte variierende Abstand a derart an die vom Betreiber vorgegebene Zielgröße der Pellets 1 angepasst, dass die Sortierwalzen im Mittenbereich, hier also im Bereich des zweiten Auffangabschnittes 25 diejenigen Pellets 1 durchlassen und aufgefangen, welche eine Größe bzw. einen Durchmesser innerhalb des vorgegebenen Toleranzbereiches aufweisen, welche also hinsichtlich des Kriteriums "Größe" für gut befunden wurden. Im gleichen Vorgang werden die vorangehend durchgefallenen, kleineren Pellets 1' und die nachfolgend durchgefallenen, größeren Pellets 1" als zu klein bzw. als zu groß aussortiert.

Alternativ kann der gleiche Effekt auch durch ein Paar von konisch sich verjüngenden Sortierwalzen 5, 6 erzielt werden, wobei unter Umständen eine parallele Ausrichtung der Längsachsen 7, 8 zweckmäßig ist, wobei aber auch eine Kombination mit einem mehr oder weniger ausgeprägten Öffnungswinkel γ in Betracht kommt. Die konische Form kann des Weiteren in Verbindung mit dem ersten Neigungswinkel α nach Fig. 1 eingesetzt werden. Sie kann diesen Neigungswinkel α aber unter Umstanden auch überflüssig machen, wobei den die oben beschriebene Vortriebskraft für die Pellets dann allein aus der gegenüber der Horizontalrichtung x schräg stehenden Konus-Oberfläche der Sortierwalzen 5, 6 resultiert.

Fig. 4 zeigt in einer schematischen Draufsicht eine Variante der Anordnung nach Fig. 3, wobei die beiden Sortierwalzen 5, 6 achsparallel, also mit parallelen Längsachsen 7, 8 angeordnet sind. Trotz ihrer Parallelität liegen die Längsachsen 7, 8 in einem ersten Neigungswinkel α > 0° relativ zur Horizontalrichtung, wie in Fig. 1 dargestellt. Eine Sortierwalze 6 ist wie in Fig. 3 zylindrisch mit im Wirkbereich konstantem Durchmesser d ausgeführt. In Abweichung davon weist die andere Dosierwalze 5 zur Erzeugung des variierenden Abstandes a₁, a₂, a₃ verschiedene entlang ihrer Längsachse 7 gestufte Durchmesser di, d₂, d₃ auf. Mit anderen Worten existieren mehrere, hier drei zylindrische Teilabschnitte der Sortierwalze 5 mit zugeordneten unterschiedlichen Durchmessern d₁, d₂, d₃. Der Teilabschnitt mit dem größten Durchmesser d₁ führt zu einem geringsten Abstand a₁, und befindet analog zur Anordnung nach Fig. 3 nahe dem Behälter 20 und dem höheren Ende der Sortierwalzen 5, 6. In weiterer Analogie zur Ausführung nach Fig. 3 folgt hierauf in Richtung des Pfeils 23 der zweite Teilabschnitt mit dem mittelgroßen Durchmesser d₂ und dem daraus folgenden mittelgroßen Abstand a₂, woran sich zum niedrigen Ende hin der dritte Teilabschnitt mit dem kleinsten Durchmesser d₃ und dem daraus folgenden größten Abstand a₃ anschließt. Die Funktionsweise ist wie im Ausführungsbeispiel nach Fig. 3, wobei Pellets 1 mit Wunschgröße im mittleren Teilabschnitt beim mittelgroßen Abstand a₂, durchgelassen und im zweiten Auffangabschnitt 25 für die Weiterverarbeitung eingesammelt werden, während Pellets 1', 1" mit Unter- oder Übergröße in den äußeren Teilabschnitten mit dem kleineren Abstand a₁ oder mit dem größeren Abstand a₃ aussortiert werden.

In Fig. 4 ist die Kombination einer gestuften Sortierwalze 5 mit einer zylindrischen Sortierwalze 6 gezeigt. Es kann aber auch eine Ausführung mit zwei Sortierwalzen 5, 6 zweckmäßig sein, welche beide gestufte Durchmesser di, d₂, d₃ aufweisen. Außerdem kann trotz der Durchmesserstufung eine Anordnung der Längsachsen 7, 8 in einem Öffnungswinkel α > 0° zweckmäßig sein. In den übrigen Merkmalen und Bezugszeichen stimmen die gezeigten und/oder beschriebenen Varianten überein.

Fig. 5 zeigt in einer schematischen Seitenansicht einen Formsortierer 3 für die Pellets 1, wobei der Formsortierer 3 funktional dem oben beschriebenen Größensortierer nachgeschaltet ist. Es erfolgt also zunächst eine Sortierung der Pellets 1 nach Größe, wobei die hinsichtlich der Größe für gut befundenen Pellets 1 anschließend hinsichtlich ihrer Form sortiert werden. Es kann aber auch eine umgekehrte Reihenfolge, also erst eine Formsortierung insbesondere nach Fig. 5 und dann eine Größensortierung insbesondere nach den Fig. 1 bis 4 zweckmäßig sein.

Das Ausführungsbeispiel des Formsortierers 3 nach Fig. 5 umfasst eine gegenüber der Horizontalrichtung x um einen zweiten Neigungswinkel β > 0° geneigte Vibrationsförderplatte 9. Aus dieser Neigung folgt, dass die Vibrationsförderplatte 9 bezogen auf die Gewichtskraftrichtung ein oberes Ende 10 und ein gegenüberliegendes unteres Ende 11 aufweist. Die Vibrationsförderplatte 9 umfasst einen auf der Oberseite ebenen Plattenkörper 36 und einen damit verbunden, hier der Einfachheit halber nur angedeuteten Vibrationsantrieb 35. Der Vibrationsantrieb 35 versetzt den Plattenkörper 36 gemäß einem Pfeil 28 in an sich bekannter Weise derart in Schwingung, dass auf der oberen Oberfläche des Plattenkörpers 36 aufliegende Objekte gezielt und gerichtet in Bewegung versetzt werden. Die Vibrationsförderplatte 9 ist vorliegend derart ausgelegt, dass aufliegende Objekte in Folge von einwirkenden oszillierenden Tangentialkräften in Richtung des oberen Endes 10 bewegt werden.

Etwa im Mittenbereich der Vibrationsförderplatte 9 befindet sich eine Pelletzufuhr 27, mittels derer die vom Größensortierer 2 als hinsichtlich der Größe als gut klassifizierten Pellets 1 auf die obere Oberfläche des Plattenkörpers 36 aufgebracht werden. Ausreichend runde, kugelartige Exemplare dieser Pellets 1 rollen auf der Oberfläche des Plattenkörpers 36 in Folge dessen Schrägstellung und der einwirkenden Gewichtskraft in Richtung des unteren Endes 11. Auf diese rollenden Pellets 1 kann der Plattenkörper 36 keine ausreichenden Tangentialkräfte ausüben, sodass der im Betrieb befindliche, oszillierend angetriebene Plattenkörper 36 keine ausreichende Förderwirkung in Richtung des oberen Endes 10 hat. Die genannten ausreichend runden, kugelartigen Pellets 1 rollen also trotz des Betriebs der Vibrationsförderplatte 9 zum unteren Ende 11, und werden mittels einer dort positionierten Auffangvorrichtung 12 als hinsichtlich des Kriteriums "Rundheit" für gut befundende Pellets 1 aufgefangen.

Bruchstücke von Pellets 1 oder in anderer Weise unrunde Pellets 1‴ können eine solch ausgeprägte Rollbewegung auf dem Plattenkörper nicht ausführen. Hierauf kann die Vibrationsförderplatte 9 im Betrieb aber sehr wohl ausreichende Tangentialkräfte ausüben, sodass die genannten Objekte entgegen der Rollrichtung zum oberen Ende 10 hin gefördert, mittels einer dort positionieren Auffangvorrichtung 34 eingesammelt und als hinsichtlich der Rundheit außerhalb der Toleranz liegend aussortiert werden. Durch gegenseitige Abstimmung von Vibrationsantrieb 35, Oberflächenbeschaffenheit des Plattenkörpers 36 und Wahl des zweiten Neigungswinkels β lässt sich der Toleranzbereich einstellen, innerhalb dessen gute Pellets 1 zum unteren Ende 11 hin rollen, und außerhalb dessen zu ausgeprägt unrunde Pellets 1‴ zum oberen Ende 10 hin gefördert und aussortiert werden.

Bei den nach vorstehender Beschreibung am unteren Ende 11 eingesammelten Pellets 1 handelt es sich also um solche Exemplare, die sowohl hinsichtlich des Kriteriums "Größe" als auch hinsichtlich des Kriteriums "Rundheit" innerhalb der gewünschten Toleranz liegen. Diese Exemplare werden nachfolgend an die Vereinzelungsvorrichtung 4 übergeben.

Ein erstes Ausführungsbeispiel einer solchen Vereinzelungsvorrichtung 4 ist in den Fig. 6 und 7 gezeigt, wobei in Fig. 6 eine schematische Seitenansicht und in Fig. 7 eine schematische Draufsicht davon dargestellt ist. Im Ausführungsbeispiel nach den Fig. 6, 7 umfasst die Vereinzelungsvorrichtung 4 einen Vorratsbehälter 15 mit darin bereitgehaltenen, vom Größensortierer 2 und vom Formsortierer 3 als in Ordnung übernommenen runden Pellets 1. Ein Boden dieses Vorratsbehälters 15 steht gegenüber der Horizontalrichtung x schräg, wobei sich die Pellets 1 in einem unteren Bereich des schräg stehenden Bodens sammeln. In einem oberen Bereich oberhalb des Pellet-Füllstandes ist der Boden mit einer Ausgabeöffnung 29 versehen. Des Weiteren umfasst die Vereinzelungsvorrichtung eine gegenüber der Horizontalrichtung x schräg stehende, und etwa parallel zum Boden des Vorratsbehälters 15 liegende Formatscheibe 13, welche um eine Drehachse 30 drehend antreibbar ist, und welche außen von Umfangswänden des Vorratsbehälters 15 umschlossen ist. Nach Fig 7 ist die Formatscheibe 13 entlang ihres Umfanges verteilt mit Aufnahmelöchern 14 versehen, in welchen jeweils genau ein Pellet 1 Platz finden kann.

Während des Betriebes taucht die Formatscheibe 13 im unteren Bereich in den Vorrat von Pellets 1 ein, wobei jeweils ein Aufnahmeloch 14 je ein Pellet 1 aufnimmt. Infolge der Drehbewegung der Formatscheibe 13 werden diese Pellets 1 sequentiell nach oben befördert. In dem Moment, in dem ein Aufnahmeloch 14 in Überdeckung mit der Ausgabeöffnung 29 kommt, fällt dort das jeweilige Pellet 1 heraus, wird als vereinzelt dosiertes Pellet 1 aufgefangen, und wird dem nächsten, hier nicht weiter dokumentierten Verfahrensschritt wie beispielsweise der Verpackung in einem Zielbehälter zugeführt.

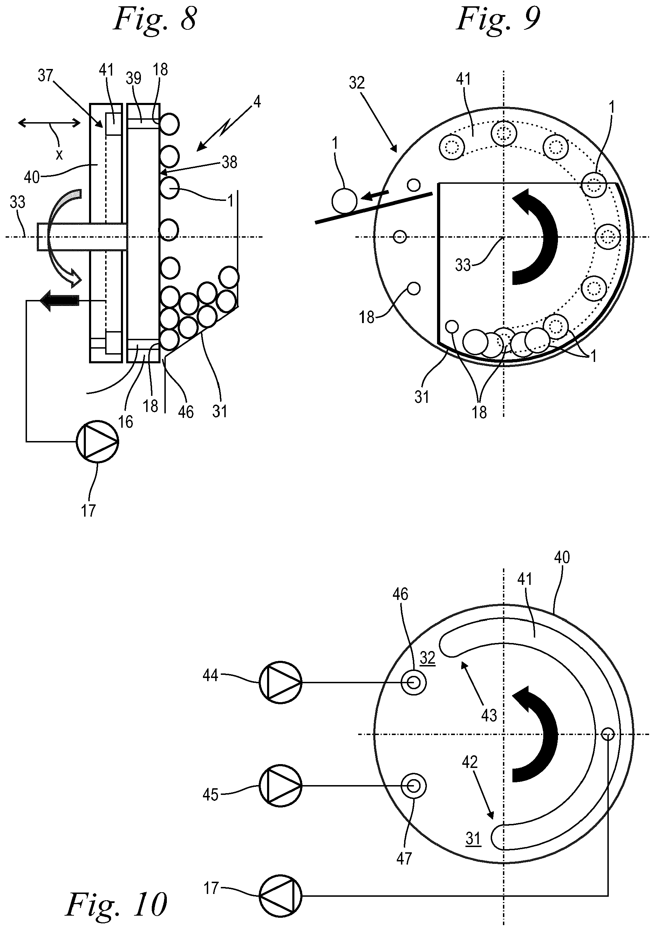

Eine weitere Ausführungsform der Vereinzelungsvorrichtung 4 als eigenständige erfindungsgemäße Bauform oder als Teil der hier beschriebenen erfindungsgemäßen Dosiervorrichtung ist in den Fig. 8, 9 und 10 als Alternative zur Vereinzelungsvorrichtung 4 der Fig. 6, 7 gezeigt, wobei in Fig. 8 eine schematische Seitenansicht und in Fig. 9 eine schematische Draufsicht dargestellt ist. Im Ausführungsbeispiel nach den Fig. 8 bis 10 umfasst die Vereinzelungsvorrichtung 4 einen Vorratsbehälter 31 mit darin bereitgehaltenen, vom Größensortierer 2 und vom Formsortierer 3 als in Ordnung übernommenen runden, kugelartigen Pellets 1. Des Weiteren umfasst die Vereinzelungsvorrichtung 4 ein um eine Drehachse 33 drehend antreibbares Vakuumdosierrad 16, eine Vakuumquelle 17, sowie eine Drucksteuereinrichtung 37.

Das Vakuumdosierrad 16 ist hier als Zylinderabschnitt mit einer zylindrischen Umfangsfläche und mit einer ebenen, zum Vorratsbehälter 31 hin freiliegenden Stirnfläche 38 ausgebildet. Der Vorratsbehälter 31 ist seinerseits zur Stirnfläche 38 hin offen, sodass die dort als Schüttgut bevorrateten Pellets 1 an der Stirnfläche 38 anliegen. Zwischen dem Vorratsbehälter 31 und dem Vakuumdosierrad 16 ist zumindest in einem in Gewichtskraftrichtung unteren Abschnitt ein Spalt 46 vorgesehen, durch den Abrieb und eventuell vorhandene Fragmente der Pellets 1 nach unten herausfallen können.

Die Drehachse 33 liegt im gezeigten bevorzugten Ausführungsbeispiel horizontal, also parallel zur Horizontalrichtung x. Sie kann aber auch gegenüber der Horizontalrichtung leicht geneigt sein, wobei der Neigungswinkel bevorzugt nicht mehr als 30° und insbesondere nicht mehr als 15° betragen sollte. Die Stirnfläche 38 ist als ebene Kreisscheibe ausgebildet und liegt orthogonal zur Drehachse 33. Dementsprechend liegt sie parallel zur Gewichtskraftrichtung, kann aber analog zur Drehachse einen leichten Neigungswinkel gegenüber der Gewichtskraftrichtung aufweisen.

Aus der Zusammenschau der Fig. 8, 9 ergibt sich, dass das Vakuumdosierrad 16 auf seiner Stirnfläche 38 mit mindestens einer in einem radialen Abstand zur Drehachse 33 liegenden Ansaugöffnung für die Pellets 1 versehen ist. Vorliegend sind in der seitlichen Stirnfläche 38 mehrere Ansaugöffnungen 18 angeordnet und dabei in Umfangsrichtung verteilt positioniert. Die Ansaugöffnung(en) 18 ist bzw. sind von der Vakuumquelle 17 mit Vakuum bzw. Unterdruck beaufschlagbar, wobei eine Verbindung der Vakuumquelle 17 mit der Ansaugöffnung 18 mittels der Drucksteuereinrichtung 37 in weiter unten näher beschriebener Weise ein- und ausschaltbar ist.

Die Drucksteuereinrichtung 37 umfasst eine parallel und koaxial zum Vakuumdosierrad 16 liegende, druckdicht dort anliegende Steuerplatte 40. Die Steuerplatte 40 ist fest montiert, dreht sich also nicht mit dem Vakuumdosierrad 16 mit. Fig. 10 zeigt in einer schematischen Stirnansicht diese Steuerplatte 40. Aus der Zusammenschau der Fig. 8, 10 ist erkennbar, dass in der Steuerplatte 40 ein bogenförmiger, mit der Vakuumquelle 17 in Verbindung stehender Steuerkanal 41 ausgebildet ist. Der Steuerkanal 41 erstreckt sich von einem ersten Ende 42 zu einem zweiten Ende 43. Das erste Ende 42 des Steuerkanals 41 befindet sich im Bereich des Vorratsbehälters 31 für die Pellets 1. Das zweites Ende 43 des Steuerkanals 41 befindet sich im Bereich einer weiter unten näher beschriebenen Ausschleusung 32 für die Pellets 1. Genauer ausgedrückt liegt das zweite Ende 43 in Drehrichtung des Vakuumdosierrades 16 kurz vor der Ausschleusung 32. Aufgrund ihres radialen Abstandes zur Drehachse 33 bewegen sich die Ansaugöffnungen 18 im Betrieb auf einer Umlaufbahn um die Drehachse 33. Position und Verlauf des Steuerkanals 41 sind an diese Umlaufbahn der Ansaugöffnungen 18 derart angepasst, dass die Ansaugöffnungen 18 auf ihrer Umlaufbahn in Überdeckung mit dem Steuerkanal 41 geraten, und dabei entlang der Erstreckung des Steuerkanals 41 über Bohrungen 39 mit dem Steuerkanal 41 in unterdruckübertragender Verbindung stehen.

In der Steuerplatte 40 befindet sich noch ein optionaler erster Kanalabschnitt 47 und ein optionaler zweiter Kanalabschnitt 48. Die Kanalabschnitte 47, 48 können vergleichbar zum Steuerkanal 41 in Umfangsrichtung eine Längserstreckung aufweisen. Vorliegend sind sie als einfache Bohrung ausgeführt. Die Kanalabschnitte 47, 48 sind ebenso wie der Steuerkanal 41 derart an die Umlaufbahn der Ansaugöffnungen 18 angepasst, dass die Ansaugöffnungen 18 auf ihrer Umlaufbahn in Überdeckung mit den ersten und zweiten Kanalabschnitten 47, 48 geraten und mit diesen dann über die jeweiligen Bohrungen 39 in überdruckübertragender Verbindung stehen. Der erste Kanalabschnitt 47 befindet sich bezogen auf die Drehrichtung des Vakuumdosierrades 16 unmittelbar am Ort der Ausschleusung 32, und steht mit einer ersten optionalen Überdruckquelle 44 in druckübertragender Verbindung. In Drehrichtung des Vakuumdosierrades 16 nachfolgend, also hinter der Ausschleusung 32 befindet sich der zweite Kanalabschnitt 48, welcher mit einer zweiten optionalen Überdruckquelle 45 in druckübertragender Verbindung steht.

Während des Betriebes taucht das Vakuumdosierrad 16 im unteren Bereich in den Vorrat von Pellets 1 ein. Infolge der Drehbewegung des Vakuumdosierrades 16 erreicht eine zunächst drucklose Ansaugöffnung 18 das im Bereich des Vorratsbehälters 31 befindliche erste Ende 42 des Steuerkanals 41, wodurch an diesem Ort die Verbindung der Vakuumquelle 17 mit der genannten Ansaugöffnung 18 eingeschaltet wird. Wegen des hier nun anliegenden Unterdrucks wird ein einzelnes Pellet von der Ansaugöffnung 18 angesaugt. Das gleiche gilt für jede infolge der Drehbewegung nachfolgende Ansaugöffnung 18. Stromab der Ansaugöffnung, beispielsweise zwischen dem Vakuumdosierrad 16 und der Steuerplatte 40, kann ein nicht dargestelltes Filtermaterial oder dergleichen angeordnet sein, um ein unerwünschtes Ansaugen von Abrieb, Fragmenten oder dergleichen zu vermeiden. Die Ansaugöffnungen 18 sind im Durchmesser kleiner als die Pellets 1, in dessen Folge ab dem ersten Ende 42 jeweils ein Pellet 1 am Rand je einer Ansaugöffnung 18 anliegt und dort durch Saugkraft gehalten wird. Infolge der Drehbewegung des Vakuumdosierrades 16 folgen die Ansaugöffnungen 18 zunächst dem Verlauf des Steuerkanals 41, wodurch die Unterdruckbeaufschlagung aufrechterhalten wird. Folglich bleiben diese Pellets 1 zunächst an den Ansaugöffnungen 18 haften und werden sequentiell nach oben befördert. Dort erreichen sie die schon erwähnte, schematisch angedeutete Ausschleusung 32. Im Einflussbereich der Ausschleusung 32, genauer kurz vor Erreichen der Ausschleusung 32 befindet sich das zweite Ende 43 des Steuerkanals 41. Mit Überschreiten dieses zweiten Endes 43 verlieren die Ansaugöffnungen 18 ihre Verbindung zum Steuerkanal 41 und damit zur Unterdruckquelle 17. Mit anderen Worten wird die Vakuumzufuhr der jeweiligen Ansaugöffnung 18 bzw. die Verbindung der Vakuumquelle 17 mit der Ansaugöffnung 18 individuell unterbrochen bzw. ausgeschaltet. In der Folge fällt im Bereich der Ausschleusung 32 das jeweilige Pellet 1 von der zugehörigen Ansaugöffnung 18 ab. Unmittelbar bei der Ausschleusung 32 kommt die jeweilige Ansaugöffnung in Überdeckung mit dem ersten Kanalabschnitt 47. Hierdurch kann ergänzend zur Abschaltung des Vakuums ein kleiner Überdruckstoß auf die Ansaugöffnung 18 gegeben werden, um ein dort möglicherweise vorhandenes Restvakuum zu beseitigen, und um ein Ablösen des Pellets 1 vom Rand der Ansaugöffnung 18 zu unterstützen.

Jedenfalls wird das abfallende Pellet 1 mittels der Ausschleusung 32 aufgefangen, aus der Vereinzelungsvorrichtung 4 ausgeschleust, und als vereinzelt dosiertes Pellet 1 ebenso wie beim Ausführungsbeispiel nach den Fig. 6, 7 dem nächsten, hier nicht weiter dokumentierten Verfahrensschritt wie beispielsweise der Verpackung in einem Zielbehälter zugeführt.

Infolge der kontinuierlichen Weiterdrehung des Vakuumdosierrades 16 geraten die einzelnen Ansaugöffnungen 18 schließlich in den Wirkungsbereich des 2. Kanalabschnitts 48. Mittels der dort hergestellten druckübertragenden Verbindung zur zweiten Überdruckquelle 45 kann beispielsweise zu Reinigungszwecken ein Überdruckstoß auf die jeweilige Ansaugöffnung 18 gegeben werden, um beispielsweise Abrieb oder Fragmente der Pellets 1 auszublasen.

## Patentansprüche

1. Dosiervorrichtung für kugelartige Pellets (1), insbesondere für Lyo Beads, umfassend einen Größensortierer (2), einen Formsortierer (3) und eine Vereinzelungsvorrichtung (4) für die Pellets (1), wobei der Größensortierer (2) zwei Sortierwalzen (5, 6) aufweist, welche um ihre Längsachsen (7, 8) drehend antreibbar sind, und welche nebeneinander derart positioniert sind, dass zwischen ihnen ein entlang der Längsachsen (7, 8) variierender und an eine vorgegebene Zielgröße der Pellets (1) angepasster Abstand (a, a₁, a₂, a₃) verbleibt, und wobei der Formsortierer (3) als gegenüber einer Horizontalrichtung (x) geneigte Vibrationsförderplatte (9) mit einem oberen Ende (10), mit einem unteren Ende (11), und mit einer im Bereich des unteren Endes (11) angeordneten Auffangvorrichtung (12) für Pellets (1) zur Weiterleitung an die Vereinzelungsvorrichtung (4) ausgebildet ist.

2. Dosiervorrichtung nach Anspruch 1,
**dadurch gekennzeichnet, dass** die beiden Sortierwalzen (5, 6) eine gegenläufige, auf ihrer Oberseite auseinanderlaufende Drehrichtung aufweisen.

3. Dosiervorrichtung nach Anspruch 1 oder 2,
**dadurch gekennzeichnet, dass** die Längsachsen (7, 8) der beiden Sortierwalzen (5, 6) zur Erzeugung des variierenden Abstandes (a) in einem Öffnungswinkel (y) zueinander liegen.

4. Dosiervorrichtung nach einem der Ansprüche 1 bis 3,
**dadurch gekennzeichnet, dass** zumindest eine Sortierwalze (6) zylindrisch mit einem entlang ihrer Längsachse (8) konstanten Durchmesser (d) ausgeführt ist.

5. Dosiervorrichtung nach einem der Ansprüche 1 bis 4,
**dadurch gekennzeichnet, dass** zumindest eine Sortierwalze (5) zur Erzeugung des variierenden Abstandes (a₁, a₂, a₃) verschiedene entlang ihrer Längsachse (7) gestufte Durchmesser (di, d₂, d₃) aufweist.

6. Dosiervorrichtung nach einem der Ansprüche 1 bis 5,
**dadurch gekennzeichnet, dass** die Längsachsen (7, 8) der beiden Sortierwalzen (5, 6) zur Erzeugung eines Vortriebes für die Pellets (1) in einem ersten Neigungswinkel (α) zur Horizontalrichtung (x) liegen.

7. Dosiervorrichtung nach einem der Ansprüche 1 bis 6,
**dadurch gekennzeichnet, dass** die Vereinzelungsvorrichtung (4) eine gegenüber der Horizontalrichtung (x) schräg stehende, drehend antreibbare Formatscheibe (13) mit Aufnahmelöchern (14) für die Pellets (1) aufweist.

8. Dosiervorrichtung nach einem der Ansprüche 1 bis 6,
**dadurch gekennzeichnet, dass** die Vereinzelungsvorrichtung (4) ein um eine Drehachse (33) drehend antreibbares Vakuumdosierrad (16), eine Vakuumquelle (17), sowie eine Drucksteuereinrichtung (37) umfasst, wobei in einer seitlichen Stirnfläche (38) des Vakuumdosierrades (16) mit radialem Abstand zur Drehachse (33) mindestens eine Ansaugöffnung (18) für die Pellets (1) angeordnet ist, und wobei eine Verbindung der Vakuumquelle (17) mit der Ansaugöffnung (18) mittels der Drucksteuereinrichtung (37) ein- und ausschaltbar ist.
